# EUROPÄISCHE PATENTANMELDUNG

(11) **EP 0 670 620 A2**
(43) Veröffentlichungstag der Anmeldung: **06.09.1995**
(21) Anmeldenummer: 95102362.1
(22) Anmeldetag: 20.02.1995
(51) Int. Cl.: H02H 5/08

(54) **Schutzschaltung für Elektrogeräte**

(30) Priorität: 22.02.1994 DE 4405634
(71) Anmelder: Lauerer, Friedrich, D-82152 Krailling (DE)
(72) Erfinder: Lauerer, Friedrich, D-82152 Krailling (DE)

(57) **Zusammenfassung**

Die Erfindung betrifft eine Schutzschaltung für Elektrogeräte, die insbesondere den Stromtod in der Badewanne verhindern soll. Ausgehend von der bekannten Spannungsteilerschaltung (DE 36 21 528) wird zusammen mit einer im Gerät, z.B. im Haartrockner verlegten Sondenleitung die Abschaltzeit durch eine besondere Schaltungsanordnung wesentlich verkürzt. Der relativ einfache Schaltungsaufbau und die Verwendung von Bauelementen mit hoher Zuverlässigkeit hat eine hohe Funktionszuverlässigkeit der Schutzschaltung zur Folge. Eine vorteilhafte Weiterbildung der Erfindung besteht darin, daß eine automatische Wiedereinschaltung dann erfolgt, wenn die Feuchtigkeit im Geräte-Inneren verschwunden bzw. verdunstet ist. Auf diese Weise kann eine besonders hohe Ansprechempfindlichkeit und ein hohes Maß an Benutzerfreundlichkeit realisiert werden.

## Beschreibung

Gegenstand der Erfindung ist eine Schutzschaltung für Elektrogeräte, insbesondere für Haartrockner zum Schutze gegen den Stromtod in der Badewanne.

Wenn der Haartrockner in die mit Wasser gefüllte Badewanne fällt ist die Lebensgefahr umso größer, je je näher der im Badewasser befindliche Haartrockner am Herzen liegt und je höher der Unfallstrom ist. Aus diesem Grunde muß es das Ziel der Schutztechnik sein, insbesondere bei hohen Unfallströmen, d.h. mindestens ab etwa 300 mA eine möglichst kurze, im Bereich bis max. 15 ms liegende Abschaltzeit zu erzielen.

Schutzschaltungen, die nur bei einer Polarität der Netzwechselstrom-Halbwelle abschalten (z.B. DE 3719727 und US-Patent Nr. 4,712,154), erfüllen daher diese Forderung nicht.

Eine weitere wesentliche Forderung an die Schutzschaltung ist eine hohe Funktionszuverlässigkeit. Diese kann z.B. nicht gewährleistet sein, wenn eine relativ hohe Anzahl von elektronischen Bauelementen (insbesondere Transistoren) erforderlich ist oder/und wenn die Abschaltung auf dem Umwege über thermische oder/und chemische Hilfsmittel erfolgt (z.B. DE 3901409).

Bekannt ist eine einfache Schaltung (DE 3621528), welche neben der notwendigen Sondenleitung nur aus einem bistabilen gepolten Relais und zwei Widerständen besteht. Die Abschaltung erfolgt bei hohen Strömen sehr schnell (kleiner 15 ms) und sie ist auch dann gewährleistet, wenn der Neutralleiter (N) unterbrochen ist, oder wenn die Badewanne elektrisch isoliert ist (hier kann der Fehlerstrom-Schutzschalter bekanntlich nicht abschalten). Außerdem ist diese Schutzschaltung auch beliebig oft testfähig. Ein Nachteil dieser Schutzschaltung besteht jedoch darin, daß in einem bestimmten Bereich der hohen Wasserwiderstände, wo gerade noch eine Abschaltung erfolgt, d.h. etwas unterhalb des Wasser-Grenzwiderstandes Rwg, die Speisespannung für die Relaisspule relativ gering ist. Dies führt u.U. zum Relaisbrummen und zur Kontaktzerstörung durch stehende Lichtbögen.

Dieser Nachteil wird durch eine Schaltung gemäß DE 3811994 dadurch beseitigt, daß im Störfall (d.h. Wasser dringt in das Gerät ein) zunächst ein Kondensator so lange aufgeladen wird, bis er die Schwellenspannung eines in Reihe geschalteten Diacs erreicht. Der Diac schaltet dann durch und der Kondensator entlädt sich durch einen starken Stromimpuls auf die Relaisspule und erregt diese mit der Folge, daß sich der Relaisanker mit erhöhter Kraft bewegen kann, so daß ein Relais-Brummen vermieden wird. Der Vorteil dieser Schaltung wird jedoch mit dem Nachteil erkauft, daß die Ankerbewegung wegen der vorhergehenden Kondensatoraufladung zeitverzögert erfolgt, was eine höhere Abschaltzeit zur Folge hat.

In DE 3719727 wird zwar die Abschaltzeit dadurch verkürzt, daß der Kondensator im störungsfreien Betrieb bereits vorgeladen ist, doch die Schaltung hat den Nachteil, daß knapp unterhalb des Wasser-Grenzwiderstandes Rwg das oben bereits erwähnte Relaisbrummen auftritt.

Die durch DE 3719727 und DE 3811994 bereits bekannten Aufgabenstellungen "Kondensator-Vorladung" und "Impuls-Erregung" werden in der Anmeldung DE 3823636 realisiert, womit die beiden Forderungen "schnelle Abschaltung" und "kontaktsichere Abschaltung" im Prinzip erfüllt werden. Doch die Forderungen an eine derartige Sicherheitsschaltung erstrecken sich nicht allein auf schnelle und kontaktsichere Abschaltung, sondern auch auf die Werte für die Wasser-Grenzwiderstände in Abhängigkeit davon, ob das Wasser beim Eindringen in den Haartrockner die Sonde mit L oder mit N verbindet, d.h. ob das Wasser zuerst bei der Lufteintritts- oder bei der Luftaustrittsöffnung in das Gerät eindringt. Bei der erwähnten Schutzschaltung ergeben sich hier Werte, die zu weit auseinanderliegen und deshalb unakzeptabel sind. Ein weiterer Nachteil dieser Schaltung ist die Tatsache, daß im Störfall ein Teil des zur Sonde führenden Stromes für die Kondensatoraufladung verlorengeht, er fließt über den Gleichrichter 20 bzw. 24 zur Erde zurück, wodurch sich die Abschaltzeit des Relais entsprechend erhöht.

Es ist Aufgabe der Erfindung, die erwähnten Nachteile zu vermeiden. Die Erfindung löst die gestellte Aufgabe durch die Merkmale des Anspruches 1. Die folgenden Unteransprüche enthalten vorteilhafte Weiterbildungen der Erfindung.

In der Zeichnung sind Ausführungsbeispiele der Erfindung wiedergegeben, die einen Haartrockner betreffen.

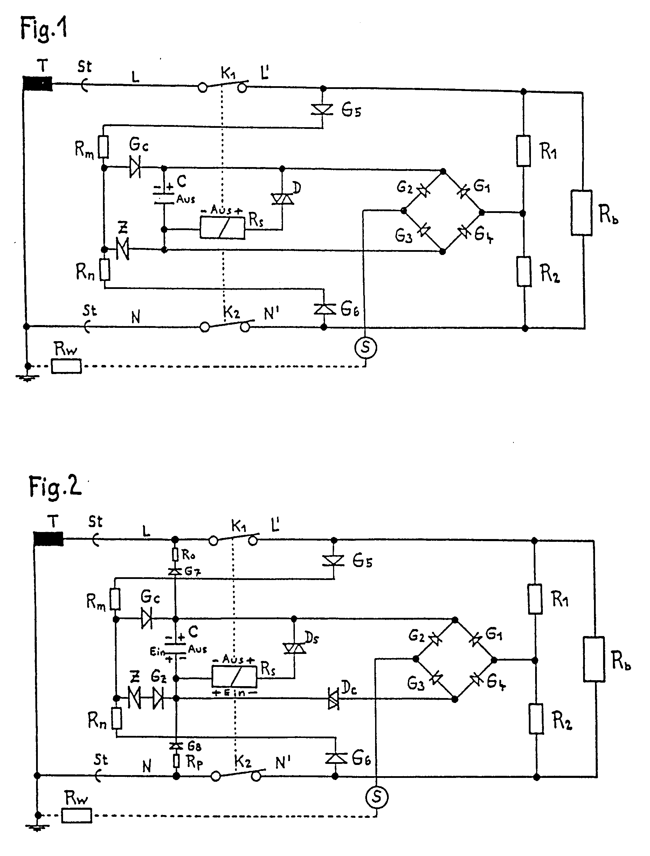

In Fig. 1 ist ein Haartrockner Rb über seine Geräteleitung L, L', N, N' an einer Steckdose St angeschlossen, die vom Netztransformator T gespeist wird. In der Geräteleitung liegen die Schaltkontakte K1 und K2 eines bistabilen und gepolten Relais mit seiner Erregerspule Rs. Die vom Stecker St zu den Relais-Schaltkontakten K1 und K2 führenden Leitungen L und N sind isoliert und können deshalb von eindringendem Wasser nicht benetzt werden. Allen, nach den Relaiskontakten K1 und K2 angeschlossenen Leitungsteilen L' und N' incl. der daran angeschlossenen Bauelemente ist innerhalb des Haartrocknergehäuses eine Sondenleitung S örtlich so vorgelagert, daß eindringendes Wasser zuerst an die Sondenleitung gelangt und erst anschließend die spannungsführenden Leitungsteile berühren kann.

Wird der Gerätestecker in die Netz-Steckdose St eingeführt, dann wird der Kondensator C aufgeladen, unabhängig davon, ob das Gerät durch den vor dem Rb liegenden Handschalter eingeschaltet ist oder nicht. Durch den symmetrischen Aufbau der Vorladeschaltung G5, Rm und G6, Rn wird eine relativ schnelle Aufladung realisiert, da beide Polaritäten der Netz-Wechslspanng zur Ladung beitragen.

Der Weg des positiven Netzstromes (d.h. Plus liegt auf L) verläuft wie folgt: T-L-L'-G5-Rm-Gc-C-G4-R2-N'-N-T. Der Weg des negativen Netzstromes ist: T-N-N'-G6-Rn-Gc-C-G4-R1-L'-L-T. Bei beiden Stromwegen wird die Kondensator-Vorladespannung durch die Zenerdiode Z (genau plus Durchlasspannung von Gc) exakt begrenzt. Die Zenerspannung ist so gewählt, daß sie knapp unterhalb der Schwellenspannung des Diac D liegt.

Damit nicht auch im Störfall (d.h. wenn Wasser in das Gerät eindringt) die Kondensatorspannung auf die Zenerspannung begrenzt wird (die Folge wäre, daß keine Abschaltung erfolgen würde), ist der Gleichrichter Gc vorgesehen, der den durch die Störung ausgelösten und von G1 kommenden Sondenstrom in Richtung Zenerdiode sperrt, d.h. der von R1 kommende Strom steht unvermindert zur Rest-Aufladung des Kondensators zur Verfügung mit der Folge, daß der Haartrockner in einer extrem kurzen Zeit abgeschaltet wird.

Bei Verwendung eines geeigneten Relais, das eine relativ geringe Eigen-Abschaltzeit in der Größenordnung von 3 ms hat, liegt die Gesamtabschaltzeit bei Schwachlastbetrieb (bis etwa 0,5 A, d.h. vor allem im besonders gefährlichen Aus-Zustand) im Bereich zwischen 3 bis 8 ms und bei Starklastbetrieb (bis 8 A) wegen des erst beim Spannungs-Nulldurchgang verlöschenden Lichtbogens im Bereich zwischen 3 und max. 12 ms.

Dringt Wasser (Rw = Wasserwiderstand) in den Haartrockner ein, so gelangt es zuerst an die Sondenleitung S. Da die Sondenleitung über den Vollweggleichrichter G1/G2/G3/G4 in der Mitte des Spannungsteilers R1, R2 angeschlossen ist, kommt -unabhängig von der jeweiligen Steckerstellung- ein Stromfluß durch die Sondenleitung S zur Erde E bzw. über einen der beiden Geräteleiter L' bzw. N' zustande. Der durch den Vollweggleichrichter gleichgerichtete Sondenstrom lädt den bereits vorgeladenen Kondensator C weiter auf.

Wenn die Spannung am Kondensator C den Schwellenwert des Diac D erreicht, schaltet der Diac D durch und der Kondensator C entlädt sich durch einen starke Stromimpuls auf die Relaisspule Rs. Die Folge ist eine kontaktsichere Abschaltung des Gerätes.

Da mit Hilfe der Zenerdiode der Wert der Kondensator-Vorladespannung Uco unabhängig von der momentanen Netzspannungshöhe knapp unterhalb des Diac-Schwellenwertes exakt realisiert werden kann, wird im Störfall nur mehr eine geringe und deshalb sehr kurzzeitige Zusatz-Aufladung erforderlich. Da außerdem der im Störfall vom Gleichrichter G1 kommende Strom wegen der Sperrwirkung von G3 vollständig zur Kondensatoraufladung verwendet wird (im Gegensatz zu DE 3823636) erfolgt die Abschaltung, wie oben bereits dargelegt in einer extrem kurzen Zeit.

Die hier angewandte Anordnung der einzelnen Bauelemente und der symmetrische Aufbau der Vorladeschaltung (G5, Rm und G6, Rn) hat weiter den Vorteil, daß die Abschaltung unabhängig von der Stekkerstellung bei gleichen Wasser-Grenzwiderständen Rwg erfolgt. Die Werte für die Widerstände Rc, Rm, Rn, R1 und R2 bestimmen den Wert für Rwg und seine Abhängigkeit von der Höhe der effektiven Netzspannung U.

In Fig. 2 ist die Schaltung gemäß Fig.1 zusätzlich mit einer automatischen Wiedereinschalteinrichtung versehen.

Gegenüber Fig. 1 sind hier zusätzlich die Bauelemente G7, Ro und G8, Rp eingebaut. Sie bewirken im abngeschalteten Zustand eine Aufladung des Kondensators C in jener Polarität, die eine Wieder-Einschaltung des gepolten und bistabilen Relais zur Folge hat. Das ist jene Polarität, die entgegengesetzt zu der Polarität ist, die zur Abschaltung führt. Damit die Kondensatoraufladung nicht durch die Zenerdiode Z begrenzt wird, was eine Wieder-Einschaltung verhindern würde, sperrt der Gleichrichter Gz den Stromfluß zur Zenerdiode Z. Ist der Kondensator C genügend aufgeladen, dann schaltet der Diac Ds durch und der Kondensator C entlädt sich durch einen starken Stromimpuls auf die Relaisspule Rs, wodurch die Wiedereinschaltung bewirkt wird. Je nach gewünschter Abschaltcharakteristik sind parallel zum Kondensator C ein Hochohmwiderstand und zwischen den Relaiskontakten K1 oder /und K2 je ein Berührungsstrom begrenzender Hochohmwiderstand zu schalten.

Die automatische Wiedereinschaltung, die selbstverständlich nur dann in Aktion tritt, wenn der Gefährdungszustand beseitigt ist (d.h. die auf den Innenteilen liegenden Wassermengen oder Wasserfilme verschwunden bzw. verdunstet sind), ist in erster Linie von praktischer Bedeutung, sowohl für den Benutzer, wie auch für den Geräte-Kundendienst.

Im praktischen Betrieb läßt es sich nicht vermeiden, daß Wasserspritzer in das Gerät gelangen, oder ein innen verschmutzter Haartrockner wird in einem stark mit Wasserdampf ausgefüllten Badezimmer in Betrieb genommen. Um den Haartrockner wieder in Betrieb nehmen zu können, müßte er mit einem zusätzlichen Handschalter versehen werden. Dies bedeutet nicht nur einen zusätzlichen Fabrikationsaufwand, sondern auch einen zusätzlichen Bedienungsaufwand, der in der Gebrauchsanweisung festgeschrieben und gerechtfertigt werden müßte, alles ein Zusatzaufwand der nicht gerade benutzerfreundlich ist und eigentlich in keinem Verhältnis zur relativ geringen Häufigkeit dieses "Betriebsfehlers" steht.

Würde dagegen kein zusätzlicher Handschalter eingebaut werden, dann würden solche "Betriebsfehler-Fälle" beim Kundendienst landen. Obwohl für den Kundendienst die Wiederingangsetzung des Gerätes mit wenig Aufwand verbunden wäre (z.B. mit Hilfe eines Permanentmagneten), belasten die damit verbundenen hohen Nebenkosten den Benutzer und damit den Marktwert des Gerätes.

Durch die automatische Wiedereinschaltung entfallen diese Probleme. Ein weiterer Vorteil kommt noch hinzu: Weil die (an sich schon sehr geringe) Häufigkeit der erwähnten Abschaltfälle keine Rolle mehr spielt, kann die Empfindlichkeit wesentlich erhöht werden. Die Abschaltung kann deshalb bereits bei leichten, aber unangenehmen Elektrisierungen erfolgen, z.B. bei einem Fehlerstrom ab 1 mA.

Insgesamt ergibt sich folgende Bilanz, wenn man die derzeit angewandte Schutztechnik dem hier vorgeschlagenen und bereits technisch realisierten Sicherheits-Haartrockner gegenüberstellt:
1. Zur Zeit ist zum Schutz gegen den Stromtod in der Badewanne der empfindliche Fehlerstrom-Schutzschalter "EFI", meist 30 mA, für Neu-Anlagen vorgeschrieben. Mit ihm läßt sich aus folgenden Gründen weder ein flächendeckender, noch ein im Einsatzfall ausreichend sicherer Schutz erzielen:
   a) Eine nachträgliche Installation von EFI-Schutzschaltern ist bei Alt-Anlagen juristisch und aus Kostengründen praktisch ausgeschlossen, d.h. zahlenmäßig ist ein Schutz nur bei einem geringen Teil der Anlagen gegeben. Angesichts der Tatsache, daß die Anzahl der jährlich neu verkauften ungeschützten Haartrockner ein Vielfaches der jährlich neu erstellten Anlagen beträgt, kann ein flächendeckender Schutz sich erst nach mehreren Jahrzehnten einstellen.
   b) Der EFI bietet keinen Schutz, wenn die Badewanne bzw. das Badewasser gegen Erde elektrisch isoliert ist. Kommt der Haartrockner zwischen linkem Oberarm und Brust bzw. Rücken zu liegen, dann kann durch das Herz ein lebe nsgefährlicher Strom fließen, der von den beiden Stirnseiten der Haartrockner-Heizwicklung ausgeht. Wie Reihenmessungen zeigten, kann das Badewasser auch bei künstlich geerdeten Badewannen gegen Erde elektrisch isoliert sein, bedingt durch Isolierschichten, die im Syphon-Anschluß liegen, siehe Elektrotechnische Zeitschrift etz Bd. 112 (1991), Seite 1353.
   c) Der EFI bietet wegen der relativ hohen Abschaltzeit nur einen bedingten Lebensschutz, wenn der Haartrockner in Herznähe zu liegen kommt und der Fehlerstrom wegen der Komponenten-Konstellation (Lage des Körpers und des Gerätes, Wasser mit hoher Leitfähigkeit, geringer Erdungswiderstand des Badewassers) sehr hoch ist, nämlich über 0,5 A), siehe etz 1991, S. 1353.
   d) Der EFI hat eine relativ hohe Ausschaltzeit bis max. 40 ms.
   e) Der EFI hat eine relativ große Ausfallrate, die in der Größenordnung von durchschnittlich 3% liegt, siehe e&i 110. Jg. (1993), Seite 96, während die Ausfallrate der hier vorgeschlagenen schutzschaltung nach Überschlagsrechnungen mindestens um eine Zehnerpotenz geringer ist.
   f) Beim EFI-Schutzschalter (30 mA) erfolgt bei einem Fehlerstrom bis etwa 23 mA keine Abschaltung. Ab etwa 10 mA erfolgt eine Verkrampfung der Muskulatur, d.h. die in der Badewanne liegende Person kann u.U. aus der Wanne nicht mehr aussteigen und -wegen einer Verkrampfung der Lungenmuskulatur- auch nicht mehr um Hilfe rufen. Ein Atemtod oder ein Ertrinken kann die Folge sein, siehe etz Bd. 110 (1989), S. 902 und S. 1272.
2. Die Erfindung, insbesondere die Weiterentwicklung gemäß Fig. 2 vereinigt in einer relativ einfachen und höchst zuverlässigen Schaltung folgende Eigenschaften:
   a) Extrem kurze Abschaltzeit (durch Vollweggleichrichtung, Kondensator-Vorladung und Verwendung eines modernen Relais mit geringer Eigenabschaltzeit): 3 bis max. 12 ms.
   b) Kontaktsichere Abschaltung durch Impuls-Erregung (insbesondere auch beim Wasser-Grenzwiderstand Rwg).
   c) Hohe Funktionszuverlässigkeit (durch eine relativ geringe Anzahl von kaum störanfälligen Bauelementen).
   d) Schutz auch bei elektrisch gegen Erde isolierter Badewanne
   e) Hohe Empfindlichkeit, d.h. Schutz auch gegen an sich ungefährliche, aber unangenehme Elektrisierungen.
   f) Benutzerfreundlich (durch automatische Wiedereinschaltung, wenn die Störursache beseitigt ist, z.B. wenn ein im Haartrockner-Innern befindlicher Wasserfilm verdunstet ist).

## Patentansprüche

1. Schutzschaltung für Elektrogeräte
- bei der bei Auftreten einer Betriebszustandsänderung, z.B. die ausreichende Änderung eines Widerstandes (Rw), ein genügend großer Strom durch einen Sensor (S) fließt,
- bei der der Sensor (S) bzw. seine Zuleitung über einen Vollweggleichrichter (G1/G2/G3/G4) in der Mitte eines symmetrischen Spannungsteilers (R1, R2) angeschlossen ist,
- bei der der Spannungsteiler aus dem Verbraucherwiderstand Rb gebildet wird oder ein eigener Spannungsteiler (R1, R2) zum Verbraucherwiderstand (Rb) parallel geschaltet ist,
- bei der der vom Sondenstrom verursachte und vom Vollweggleichrichter erzeugte Gleichstrom einen Kondensator (C) auflädt,
- bei der parallel zum Kondensator (C) eine Reihenschaltung aus einem Diac (D) und einer Relaisspule (Rs) liegt,
- bei der die Relaisspule (Rs) ein Teil eines bistabilen und gepolten Relais (Rs, K1, K2) ist und eine allpolige Trennung des Verbraucherwiderstandes (Rb) von der Stromquelle (T) dann erfolgt, wenn durch die Sondenleitung (S) ein genügend großer Strom eine genügend lange Zeit fließt,
- bei dem Mittel vorgesehen sind, die den Kondensator (C) schon im ungestörten Zustand auf eine unterhalb der Diac-Schwellenspannung liegende Spannung aufladen,
- bei der die auf diese Weise erzeugte Kondensator-Vorladung mit Hilfe einer Zenerdiode (Z) begrenzt wird, so daß die Vorladespannung knapp unterhalb der Diac-Schwellenspannung liegt,
dadurch gekennzeichnet, daß
- parallel zum Auflade-Kondensator (C) eine Reihenschaltung liegt, die aus der Zenerdiode (Z) und einem Gleichrichter (Gc) besteht,
- die Durchlaßrichtung der Zenerdiode (Z) und des Gleichrichters (Gc) zum positiven Pol des Kondensators (C) zeigt,
- von der Verbindungsleitung zwischen Zenerdiode (Z) und Gleichrichter (Gc) je eine Reihenschaltung sowohl zum Leiter L', wie auch zum Leiter N' führt und diese Reihenschaltung je aus einem Gleichrichter (G5, G6) und einem Widerstand (Rm, Rn) besteht,

2. Schutzschaltung nach Anspruch 1, dadurch gekennzeichnet, daß Mittel vorgesehen sind, die eine automatische Wiedereinschaltung ermöglichen für den Fall, daß die Störgröße wieder verschwunden ist.

3. Schutzschaltung nach Anspruch 2, dadurch gekennzeichnet, daß von jedem der beiden Anschlüsse des Kondensators (C) je eine Reihenschaltung aus einem Widerstand (Ro, Rp) und einem Gleichrichter (G7, G8) zu den beiden Netzleitern (L, N) führt und die Polarität beider Gleichrichter (G7, G8) so geschaltet ist, daß der Kondensator (C) im ausgeschalteten und ungestörten Zustand im Vergleich zur Vorladespannung gegenpolig aufgeladen wird.

4. Schutzschaltung nach Anspruch 3, dadurch gekennzeichnet, daß zwischen der Zenerdiode (Z) und der Verbindungsleitung des Kondensators (C) und der Relaisspule (Rs) ein Gleichrichter (Gz) so geschaltet ist, daß seine Durchlaßrichtung gegenpolig zur Durchlaßrichtung der Zenerdiode (Z) liegt.

5. Schutzschaltung nach Anspruch 4, dadurch gekennzeichnet, daß in der vom Vollweggleichrichter (G1/G2/G3/G4) zum Kondensator (C) führenden Leitung ein Diac (Dc) liegt.

6. Schutzschaltung nach Anspruch 5, dadurch gekennzeichnet, daß die Schwellenspannung des Diacs (Dc) größer ist als die Schwellenspannung des zweiten Diacs (Ds), und diese größer ist als die Zenerspannung der Zenerdiode (Z).

7. Schutzschaltung nach Anspruch 6, dadurch gekennzeichnet, daß parallel zum Kondensator (C) ein Hochohmwiderstand liegt.

8. Schutzschaltung nach Anspruch 7, dadurch gekennzeichnet, daß zwischen den Relaiskontakten K1 oder/und K2 je ein Berührungsstrom begrenzender Hochohmwiderstand liegt.
